# EUROPÄISCHE PATENTSCHRIFT

(11) **EP 3 008 660 B1**
(45) Veröffentlichungstag und Bekanntmachung des Hinweises auf die Patenterteilung: **07.07.2021**
(21) Anmeldenummer: 14727751.1
(22) Anmeldetag: 16.05.2014
(51) Int. Cl.: G06K 9/00, G01C 21/00, G08G 1/00

(54) **ASSISTENZVORRICHTUNG UND VERFAHREN ZUM UNTERSTÜTZEN EINES FAHRERS EINES FAHRZEUGS**
ASSISTANCE DEVICE AND METHOD FOR ASSISTING A DRIVER OF A VEHICLE
DISPOSITIF ET PROCÉDÉ D'ASSISTANCE AU CONDUCTEUR D'UN VÉHICULE

(30) Priorität: 14.06.2013 DE 102013211109
(43) Veröffentlichungstag der Anmeldung: 20.04.2016
(73) Patentinhaber: Robert Bosch GmbH, 70442 Stuttgart (DE)
(72) Erfinder: HEIGELE, Christian, 70435 Stuttgart (DE); MIELENZ, Holger, 73760 Ostfildern (DE)
(86) Internationale Anmeldenummer: PCT/EP2014/060093
(87) Internationale Veröffentlichungsnummer: WO 2014/198484

(56) Entgegenhaltungen:
- DE-A1-102009 006 113
- US-A1- 2012 053 755
- US-A1- 2012 143 372
- US-A1- 2012 323 431
- CHRISTIAN HEIGELE ET AL: "GridTiles: A method for modelling a spatial unconstrained environment", INTELLIGENT COMPUTER COMMUNICATION AND PROCESSING (ICCP), 2012 IEEE INTERNATIONAL CONFERENCE ON, IEEE, 30 August 2012 (2012-08-30), pages 31-35, XP032268760, DOI: 10.1109/ICCP.2012.6356157 ISBN: 978-1-4673-2953-8

## Beschreibung

### Stand der Technik

Die vorliegende Erfindung betrifft eine Assistenzvorrichtung, insbesondere für ein Fahrzeug. Weiterhin betrifft die Erfindung ein Verfahren zum Unterstützen eines Fahrers des Fahrzeugs. Dabei stellt das erfindungsgemäße Verfahren insbesondere ein Fahrerassistenzsystem dar.

Fahrerassistenzsysteme zeichnen sich durch einen stetig steigendenden Automatisierungsgrad aus und können in einer Vielzahl von Fahrsituationen eingesetzt werden. Als Beispiel hierfür kann ein Einparksystem, ein automatisches Bremssystem oder ein Spurwechselsystem angesehen werden.

Ein Kernbestandteil der Fahrassistenzsysteme mit automatischer Längsführung und/oder automatischer Querführung des Fahrzeugs ist ein Umfeldmodell, das als Datenbasis für die Situationsanalyse, Fahrplanung und/oder Fahrzeugregelung dient. Ein derartiges Umfeldmodell soll insbesondere sensorunabhängig und/oder funktionsunabhängig sein, um die Komplexität von Fahrzeugen mit verschiedenen Fahrerassistenzsystemen und unterschiedlichen Sensoren zu begrenzen. Somit kann der Entwicklungsaufwand durch wiederverwendbare Module und Komponenten reduziert werden, was auch eine Zusammenarbeit mehrerer Lieferanten bei der Integration der Komponenten erleichtert.

Aus dem Stand der Technik sind mehrere Verfahren zur Umfeldmodulierung bekannt. So ist einerseits bekannt, Objektlisten anzulegen, die jedoch nicht ausreichend sind, um den von vielen Assistenzsystemen geforderten Detaillierungsgrad der Informationen darzustellen. Andererseits sind Belegtheitsgitter bekannt. Eine solche Möglichkeit ist beispielsweise aus der US 2012/0053755 A1 bekannt. Diese können in Erweiterung auch durch GridTiles realisiert werden. GridTiles sind insbesondere aus der DE 10 2012 214 307 A1 und aus "GridTiles: A method for modelling a spatial unconstrained environment", Christian Heigele et al. bekannt. Bei derartigen Verfahren wird mittels Sensoren die Umgebung eines Fahrzeugs vermessen, um die so erhaltenen Daten anschließend als Belegtheitswerte in ein virtuelles Netz aus Zellen einzutragen. Üblicherweise weist dazu jeder Sensor eigene, lokale Zellen auf, die über eine Fusionsvorschrift in ein globales Netz aus Zellen integriert werden.

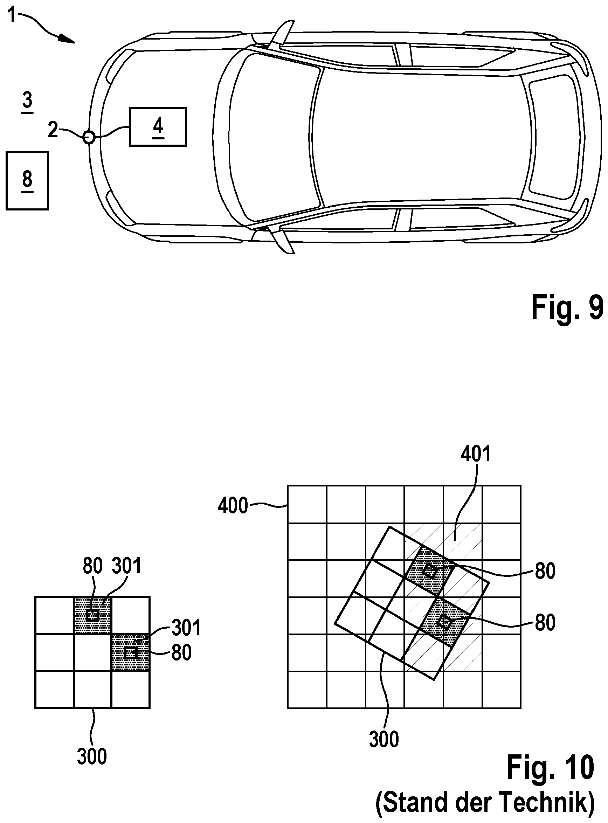

Als Beispiel ist in Figur 10 gezeigt, wie ein lokales Netz 300, das beispielsweise einem Sensor zugeordnet ist, in ein globales Netz 400 eingefügt werden soll. Es ist ersichtlich, dass derartige Netze systembedingt einen Diskretisierungsfehler aufweisen, so das ein Hindernis 80 stets durch eine vollständige Zelle 301 abgebildet wird. Durch die Abmessungen der Zellen 301, die üblicherweise größer sind als das Hindernis 80, entsteht besagter Diskretisierungsfehler. Dieser Diskretisierungsfehler erhöht sich durch das Integrieren des lokalen Netzes 300 in das globale Netz 400, da hier Fusionsvorschriften beachtet werden müssen. So kann das lokale Netz 300 insbesondere eine unterschiedliche Ausrichtung aufweisen als das globale Netz 400. Aus Figur 10 ist ersichtlich, dass ein sehr großer Belegtheitsbereich 401 vorgesehen werden muss, um die einzelnen Hindernisse 80 zu repräsentieren. Somit entsteht jedoch ein sehr großer Diskretisierungsfehler, der für viele Assistenzsysteme nicht akzeptabel ist.

### Offenbarung der Erfindung

Die Erfindung betrifft eine Assistenzvorrichtung nach Anspruch 1. Die Assistenzvorrichtung umfasst zumindest einen Sensor, der eingerichtet ist, die Umgebung eines Fahrzeugs, für das die Assistenzvorrichtung bevorzugt vorgesehen ist, abzutasten. Weiterhin umfasst die erfindungsgemäße Assistenzvorrichtung zumindest ein Steuergerät, das mit dem Sensor verbunden ist. Auf diese Weise ist es möglich, dass Steuergerät und Sensor wechselweise Daten austauschen. Insbesondere kann der Sensor Daten an das Steuergerät senden, wobei bevorzugt ebenso vorgesehen ist, dass das Steuergerät Daten an den Sensor sendet. Das Steuergerät weist eine erste Speichervorrichtung auf, die ein Umgebungsmodell der abgetasteten Umgebung speichert. Dazu wird die abgetastete Umgebung in zumindest einer ersten virtuellen Zelle gespeichert, wobei die erste virtuelle Zelle bevorzugt ein erstes GridTile sein kann. Die erste virtuelle Zelle repräsentiert dabei einen Teilbereich der Umgebung des Fahrzeugs. Somit ist vorteilhaft vorgesehen, dass mehrere erste Zellen vorhanden sein können, um die Umgebung des Fahrzeugs in mehrere Teilbereiche aufzuteilen, wobei jede der ersten Zellen einen eigenen Teilbereich der Umgebung des Fahrzeugs repräsentiert. Erfindungsgemäß ist weiterhin vorgesehen, dass der Sensor eine zweite Speichervorrichtung aufweist, welche von dem Sensor gewonnene Daten in zumindest einer zweiten virtuellen Zelle speichert. Die zweite virtuelle Zelle ist wiederum insbesondere ein zweites GridTile. Die zweite Zelle repräsentiert zumindest einen Teilbereich einer Umgebung des Sensors. Insbesondere ist vorgesehen, dass mehrere zweite Zellen vorhanden sind, die einen Teilbereich der Umgebung repräsentieren, der sich vollständig um den Sensor herum erstreckt. Somit ist es möglich, sämtliche Daten des Sensors unabhängig von dessen Ausrichtung zu den zweiten Zellen abzuspeichern. Erfindungsgemäß repräsentiert die zweite Zelle zumindest teilweise denselben Bereich der Umgebung wie die erste Zelle. Das Steuergerät ist außerdem erfindungsgemäß eingerichtet, den Inhalt der zweiten Zelle in die erste Zelle zu integrieren. Somit können die Daten, die in der zweiten Zelle gespeichert sind, ohne weitere Diskretisierungsverluste in die erste Zelle integriert werden. Daher wird eine aufwändige und fehlerbehaftete Transformation vermieden.

Die Erfindung betrifft weiterhin ein Verfahren zum Unterstützen eines Fahrers eines Kraftfahrzeugs nach Anspruch 6. Das Verfahren umfasst die folgenden Schritte: Zunächst wird ein Umgebungsmodell bereitgestellt, das zumindest einen Teilbereich einer Umgebung des Fahrzeugs in zumindest einer ersten Zelle abbildet. Die erste Zelle ist vorteilhafterweise ein erstes GridTile. Anschließend wird die Umgebung mittels zumindest einem Sensor abgetastet. Die gemessenen Umgebungsdaten werden in eine zweite Zelle eingetragen, wobei die zweite Zelle bevorzugt ein zweites GridTile ist. Zuletzt wird der Inhalt der zweiten Zelle in die erste Zelle integriert. Dabei ist erfindungsgemäß vorgesehen, dass die zweite Zelle zumindest teilweise denselben Bereich der Umgebung repräsentiert, wie die erste Zelle. Während des ersten Schritts, das heißt, während des Bereitstellens des Umgebungsmodells, ist bevorzugt vorgesehen, dass zumindest eine erste Zelle bereitgestellt wird, auch wenn diese noch keinerlei Inhalt aufweist. In diesem Fall erfolgt eine Eintragung von Daten in die erste Zelle erstmalig durch das Integrieren des Inhalts der zweiten Zelle in die erste Zelle. Somit kann ein Umgebungsmodell auch komplett von Anfang an aufgebaut werden.

Die Unteransprüche haben bevorzugte Weiterbildungen der Erfindung zum Inhalt.

Vorteilhafterweise ist eine Vielzahl von ersten Zellen und von zweiten Zellen vorhanden, wobei die Anzahl von ersten Zellen die Anzahl von zweiten Zellen übersteigt. Somit kann die Umgebung des Fahrzeugs in eine Vielzahl von Teilbereichen aufgeteilt werden, wobei jeder Teilbereich durch eine erste Zelle repräsentiert ist. Die Anzahl der zweiten Zellen repräsentiert schließlich eine Genauigkeit des Sensors, da ein Erfassungsbereich des Sensors durch eine große Anzahl an zweiten Zellen sehr detailliert diskretisiert wird. Durch das Vorsehen von mehreren ersten Zellen als zweite Zellen ist außerdem sichergestellt, dass jede zweite Zelle Daten in eine erste Zelle eintragen kann. Somit können sämtliche von dem Sensor gemessenen Daten in dem Umgebungsmodell berücksichtigt werden.

Bevorzugt repräsentiert die zweite Zelle denselben Bereich wie die erste Zelle. Daher ist bevorzugt eine Abmessung und eine Ausrichtung der ersten Zelle und der zweiten Zelle identisch. Es ist daher offensichtlich, dass keinerlei Transformationsvorschriften benötigt werden, um den Inhalt der zweiten Zelle in die erste Zelle zu integrieren. Da eine eindeutige Zuordnung der zweiten Zellen zu den ersten Zellen vorhanden ist, können Belegungsinformationen innerhalb der einzelnen Zellen sehr einfach aktualisiert werden.

In einer bevorzugten Ausführungsform der erfindungsgemäßen Assistenzvorrichtung verwendet das Steuergerät für die Integration des Inhalts der zweiten Zelle in die erste Zelle ein Komprimierungsverfahren. Dies ist bevorzugt ein Lauflängencodierungsverfahren. Somit kann der Datenfluss sehr gering gehalten werden, wobei dennoch sämtliche relevanten Daten von der zweiten Zelle an die erste Zelle übergeben werden. Dies erlaubt ein sehr effizientes Arbeiten des Steuergeräts.

Analog dazu ist für das erfindungsgemäße Verfahren bevorzugt vorgesehen, dass für die Integration des Inhalts der zweiten Zelle in die erste Zelle ein Komprimierungsverfahren verwendet wird. Dieses Komprimierungsverfahren ist wiederum bevorzugt ein Lauflängencodierungsverfahren.

Für die erfindungsgemäße Assistenzvorrichtung ist vorteilhafterweise vorgesehen, dass die erste Speichervorrichtung und die zweite Speichervorrichtung identisch sind. Somit kann der Sensor sehr einfach aufgebaut sein, da dieser keine eigene Speichervorrichtung benötigt. Insbesondere kann vorgesehen sein, dass der Sensor die zweiten Zellen direkt in die ersten Zellen integriert, ohne diese selbst explizit zu speichern.

Weiterhin weist die Assistenzvorrichtung bevorzugt einen derartigen Sensor auf, der eine Belegungswahrscheinlichkeit für zumindest einen Teil der zweiten Zelle bestimmt. Die Belegungswahrscheinlichkeit ist ein Maß dafür, wie genau der Sensor die Umgebung erfassen kann. Falls durch den Sensor eindeutig bestimmbar ist, dass sich ein Hindernis in seinem Erfassungsbereich befindet, so wird als Belegungswahrscheinlichkeit ein Wert von 100% angegeben.

Die Erfindung betrifft weiterhin ein Computerprogrammprodukt nach Anspruch 9. Als Computer ist hier insbesondere auch ein Steuergerät eines Fahrzeugs anzusehen, auf dem das Computerprogrammprodukt abläuft.

Schließlich betrifft die Erfindung ein Fahrzeug, das eine zuvor genannte Assistenzvorrichtung aufweist.

### Kurze Beschreibung der Zeichnungen

Die Erfindung wird nun anhand von Ausführungsbeispielen unter Berücksichtigung der beigefügten Zeichnungen im Detail beschrieben. In den Zeichnungen ist:
- Figur 1: eine schematische Darstellung eines Umgebungsmodells, wie es in einem Fahrzeug gemäß einem Ausführungsbeispiel der Erfindung verwendet wird,
- Figur 2: ein Ausschnitt aus dem Umgebungsmodell aus Fig. 1,
- Figur 3: eine schematische Ansicht der Verteilung von zweiten Zellen um einen Sensor des Fahrzeugs gemäß dem Ausführungsbeispiel der Erfindung,
- Figur 4: eine Detailansicht aus Figur 3,
- Figur 5: ein schematischer Überblick über die Integration der Sensordaten in das Umgebungsmodell, wie es in dem Fahrzeug gemäß dem Ausführungsbeispiel der Erfindung geschieht,
- Figur 6: eine schematische Ansicht über die Verteilung der zweiten Zellen um einen zweiten Sensor des Fahrzeugs gemäß dem Ausführungsbeispiel der Erfindung,
- Figur 7: eine schematische Ansicht über die Verteilung der zweiten Zellen um einen dritten Sensor des Fahrzeugs gemäß dem Ausführungsbeispiel der Erfindung,
- Figur 8: eine schematische Ansicht über die Verteilung der zweiten Zellen um einen vierten Sensor des Fahrzeugs gemäß dem Ausführungsbeispiel der Erfindung,
- Figur 9: eine schematische Ansicht des Fahrzeugs gemäß dem Ausführungsbeispiel der Erfindung, und
- Figur 10: eine schematische Ansicht des Umgebungsmodells gemäß dem Stand der Technik.

### Ausführungsbeispiel der Erfindung

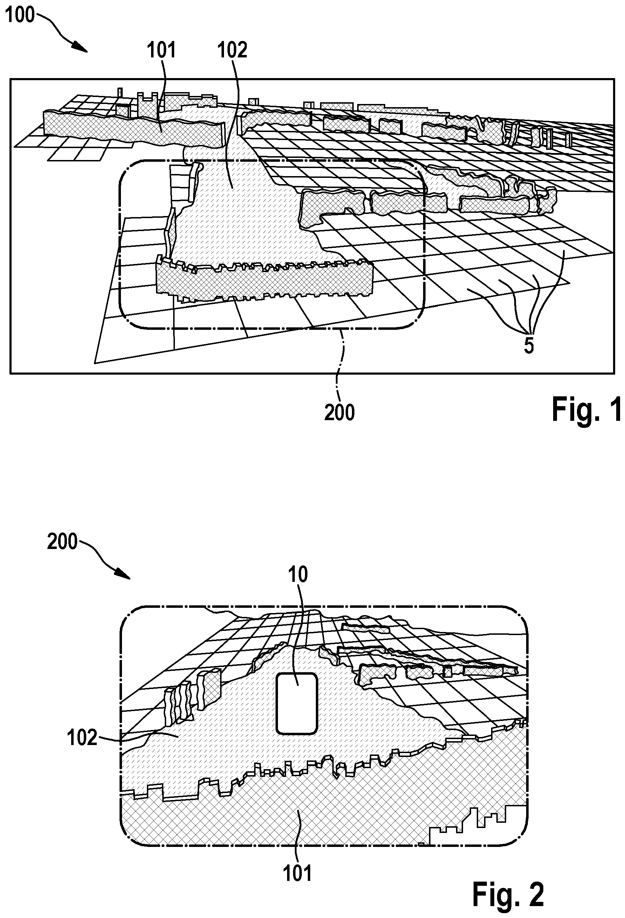

Zunächst wird ein erstes Ausführungsbeispiel ohne Bezug zu den Figuren beschrieben. Hierzu sind sowohl die ersten Zellen als auch die zweiten Zellen durch GridTiles realisiert. Mittels dieser GridTiles wird das globale Umgebungsmodell (erste GridTiles) auf einem performanten Zentralsteuergerät erstellt. Auf den einzelnen, rechentechnisch deutlich weniger stark ausgestatteten Sensorsteuergeräten, werden ebenfalls mit GridTiles (zweite GridTiles) die Messdaten mittels eines Sensormodells integriert, vergleiche Abbildung 2. Die GridTiles auf den Sensorsteuergeräten (zweite GridTiles) sind hierbei in der selben Auflösung, Positionierung und Orientierung, wie die entsprechenden GridTiles im globalen Umfeldmodell (erste GridTiles) ausgerichtet. Dies ermöglicht eine direkte Integration in die globalen GridTiles (erste GridTiles) und vermeidet unnötige Diskretisierungsfehler durch eine Transformation. Zudem wird durch das Vermeiden der Transformation eine Reduktion der Berechnungskomplexität erzielt.

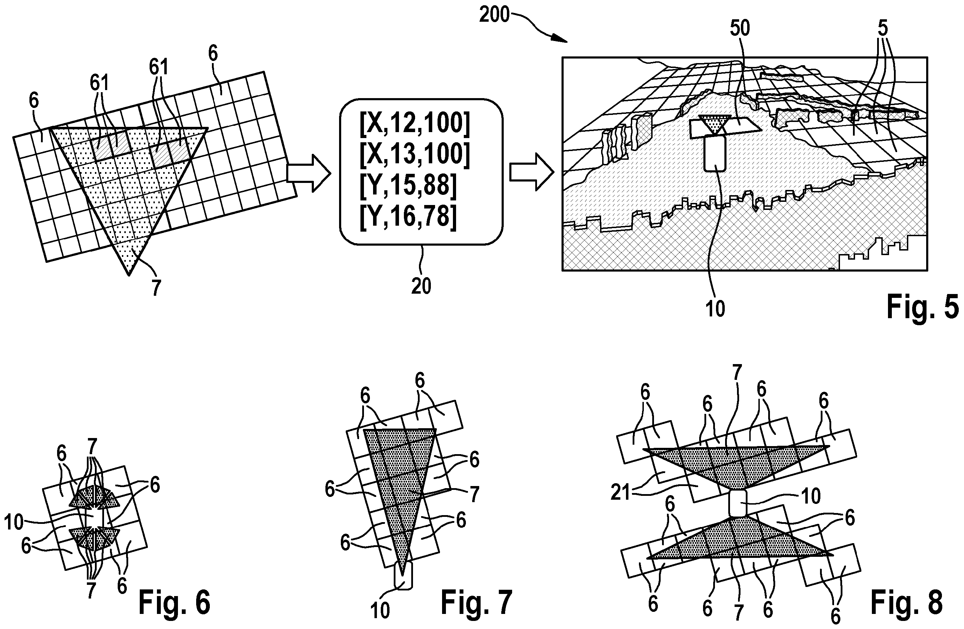

Die Anzahl und Gestalt der benötigten GridTiles auf dem Sensorsteuergerät (erste GridTiles) richtet sich nach dem FOV des jeweiligen Sensorsystems. Dies wird später mit Bezug auf die Figuren 6 bis 8 detailliert erläutert. Für die Ausrichtung der jeweiligen Grid-Tiles erhalten die Sensorsteuergeräte die aktuelle Position des Fahrzeugs und eindeutige Identifikationen der GridTiles (erste GridTiles) im Umfeld des Fahrzeugs übermittelt.

Zu jedem Zeitschritt eines Sensorsteuergeräts erfolgt das Update des (globalen) Welt-Umfeldmodells (erste GridTiles) auf dem Zentralsteuergerät, indem auf dem jeweiligen Sensor-Grid (zweites GridTile) eine Kodierung derjenigen Zellen durchgeführt wird, die relevante Belegtheitsinformationen besitzen. Relevant bedeutet hierbei einen besonderen Zustand, der mit hoher Priorität in das globale Umfeldmodell (erste GridTiles) integriert werden muss. Vorteilhafterweise sind dies Zellen mit hoher Plausibilität in ihrer Belegtheit. In einer vorteilhaften Ausprägung bewirkt zeitliche Änderung zum letzten Zeitschritt eine Übertragung zum Zentralsteuergerät.

In einer besonders vorteilhaften Ausprägung werden nicht nur die relevanten Informationen in Rohinformationen, also Zellpositionen in den jeweiligen zweiten GridTiles, übertragen, sondern vielmehr mittels bekannten Komprimierungsmethoden übermittelt. Insbesondere denkbar ist hier die sogenannte Lauflängenkodierung, bei denen nur die Startposition einer relevanten Zelle und die Anzahl der in einer Reihe/Spalte folgenden Zellen gleichen Types übertragen wird.

In einer weiteren besonders vorteilhaften Ausprägung können die einzelnen Sensorsteuergeräte ihre Informationen um eine Relevanzkodierung ergänzen. Dies dient zu einer optimalen Selektion der zu übermittelnden Informationen, wenn das Übertragungsnetzwerk hohe Last besitzt und so eine Übermittelung aller zur Verfügung stehender Information nicht garantiert werden kann. Durch die Fähigkeit, lokal auf (Sensor-) Steuergerätebene ebenfalls historische Information zu speichern, geht diese nicht verloren und kann zu einem späteren Zeitpunkt, wenn die Netzwerklast wieder gesunken ist, übertragen werden. Daher weist der Sensor eine zweite Speichervorrichtung auf, in der die gewonnenen Daten mittels zweiter GridTiles abgespeichert werden.

Vorteile der Erfindung sind:
- Das hochgenaue Umfeldmodell (erste Zellen bzw. erste GridTiles) und die Integration der lokalen Sensor-Umfeldmodelle (zweite Zellen bzw. zweite GridTiles) kann auf einem performanten Zentralsteuergerät laufen, so dass die weiteren Auswertungen für Pfadplanung, Regelung oder HMI mit der benötigten Taktrate umgesetzt werden können.
- Das System beschreibt eine skalierbare Systemarchitektur, wonach die Schnittstellen über GridTiles abstrakt und eindeutig beschrieben sind und somit eine Anbindung von Sensoren unterschiedlicher Anzahl und Typs ermöglicht wird.
- Die eindeutige Zuordnung der Sensor-Grids (zweites GridTile) und deren Elemente zum Welt-Grid (erstes GridTile) vermeidet aufwendige und fehlerbehaftete Transformationen.
- Durch das beschriebene oder auch durch weitere bekannte Komprimierungsverfahren ist eine sehr performante Kommunikation zwischen Sensorsteuergeräten (mit der zweiten Speichervorrichtung) und Zentralsteuergerät (mit der ersten Speichervorrichtung) umsetzbar. Erfindungsgemäß ist hervorzuheben, dass durch die eindeutige Zuordnung der GridTiles zwischen Sensor-Steuergerät und Zentral-Steuergerät nur diejenigen Elemente versendet werden müssen, die einen relevanten Belegtheitsgrad besitzen.
- Sensorsteuergeräte können kostengünstiger dimensioniert werden, da lediglich Algorithmen für das Sensormodell gerechnet werden müssen.

Systemspezifische und/oder Funktionsspezifische Algorithmen laufen auf dem Zentralsteuergerät.
- Der vorgestellte Systemansatz bietet eine Standardisierung von Schnittstellen zu Sensoren, so dass diese einfacher in Systeme unterschiedlicher Sensortypen integriert werden können
- Die Lasten auf den verwendeten Automotive-Netzwerken (CAN, Flexray, Ethernet) kann durch die Verwendung der Grid-Tiles deutlich reduziert werden
- Die eindeutige Zuordnung der Sensor-GridTiles (zweite GridTiles) zu den Welt-GridTiles (erste GridTiles) ermöglicht ein effizientes Update der Belegungsinformation des Welt-Grids (erste GridTiles), insbesondere die Informationen: "Hindernis", "befahrbar", "ungenaue Information" oder "unbekannt".
- Auf den Sensorsteuergeräten, insbesondere in der zweiten Speichervorrichtung, muss nur so viel Speicher vorgesehen werden, dass der Erfassungsbereich des jeweiligen Sensorsystems abgebildet werden kann. Andererseits könnte dieser Speicher durch eine weitere vorteilhafte Ausprägung entfallen, indem das Sensorsteuergerät mittels eines Hash-Codes oder dergleichen aus den erhaltenen Abstandsinformationen direkt die jeweilige Identifikation (ID) des zugehörigen GridTiles und des Elements (Teilbereich des GridTiles, in dem die Abstandsinformationen gemessen wurden) berechnet. Dies bedeutet, dass die Sensoren nicht notwendigerweise auf GridTile-Basis laufen müssen, sondern durch eine Funktion Abstandswerte direkt in die Welt-Grid-IDs (erste GridTiles) transformieren können
- Durch die Verwendung von GridTiles auch auf den Sensorsteuergeräten kann eine Integration der aktuellen Messdaten in Relation zu historischen Messdaten erfolgen und so beispielsweise eine direkte Plausibilisierung auf Steuergerätebene mit dem entsprechenden Sensormodell erfolgen. Mit den aus dem Stand der Technik bekannten Occupancy Grids wäre dieser Schritt nicht möglich, da hier davon auszugehen ist, dass der Sensor sehr rasch Messwerte außerhalb des Grids bekommt und daher rechentechnisch teure Kopieroperationen und/oder Transformationsoperationen durchgeführt werden müssen, um das Grid wieder auf Sensorposition zu zentrieren.
- Vorteilhaft wird die Größe eines GridTiles auf dem Zentralsteuergerät nach den maximalen Reichweiten desjenigen Sensors ausgelegt, der die geringste Reichweite und/oder den geringsten Erfassungsbereich im Sensorsystemverbund besitzt.

Figur 1 zeigt ein hochgenaues Umgebungsmodell 100, das Daten einer Umgebung 3 (vergleiche Figur 9) eines Fahrzeugs 1 (vergleiche Figur 9) speichert. Die Umgebung 3 wird durch erste Zellen 5 repräsentiert, die Belegtheitswerte aufweisen. So sind freie Bereiche 102 vorhanden, die durch Hindernisse 101 begrenzt werden. Weiterhin ist in Figur 1 ein Ausschnitt 200 gezeigt, der in Figur 2 detailliert dargestellt ist.

Figur 2 zeigt den zuvor genannten Ausschnitt 200. Hier ist neben den Freiflächen 102 und den Hindernissen 101 eine Fahrzeugrepräsentation 10 eingezeichnet. Die Fahrzeugrepräsentation 10 zeigt an, wo sich das Fahrzeug 1 befindet, bzw. welche Position das Fahrzeug 1 relativ zu dem Umgebungsmodell 100 einnimmt.

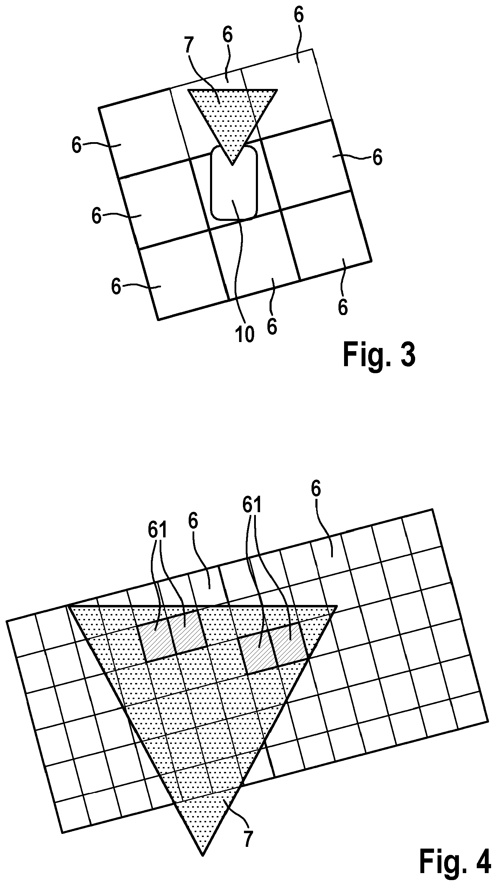

Figur 3 zeigt schematisch die Fahrzeugrepräsentation 10. Weiter zeigt Figur 3 einen Erfassungsbereich 7 eines Sensors 2 (vergleiche Figur 9) des Fahrzeugs 1, das durch die Fahrzeugrepräsentation 10 repräsentiert wird. Der Sensor 2 kann Hindernisse 8 (vergleiche Figur 9) detektieren, wobei diese in zweite Zellen 6 eingetragen werden, die die Fahrzeugrepräsentation 10 vollständig umgeben. Somit kann der Erfassungsbereich 7 des Sensors 2 unabhängig von der Ausrichtung des Fahrzeugs und damit unabhängig von der Ausrichtung der zweiten Zellen 6 relativ zu der Fahrzeugrepräsentation 10 stets Daten in zumindest eine der zweiten Zellen 6 eintragen. Daher ist eine umfassende und genaue Erfassung der Umgebung 3 durch den Sensor 2 möglich.

Figur 4 zeigt zwei zweite Zellen 6, die den Erfassungsbereich 7 des Sensors 2 abbilden. Durch ein Hindernis 8 wird von dem Sensor 2 erkannt, dass vier Teilbereiche 61 der zweiten Zellen 6 nicht befahren werden können. Daher werden die Teilbereiche 61 der zweiten Zellen 6 als belegt markiert. Somit tragen die zweiten Zellen 6 aktuelle Umgebungsinformationen, die jedoch von dem Umgebungsmodell 100 noch nicht berücksichtigt sind. Weiterhin ist es möglich, dass die zweiten Zellen 6 zuvor gespeicherte Umgebungsdaten aufweisen, wodurch die soeben detektierten Hindernisse 8 mit zuvor detektierten Hindernissen 8 vergleichbar sind, um eine Plausibilitätsüberprüfung der Messwerte zu erhalten.

Um die Teilbereiche 61 der zweiten Zellen 6 in dem Umgebungsmodell 100 zu aktualisieren, das heißt, um die erkannten Hindernisse 8 in dem Umgebungsmodell 100 zu berücksichtigen, ist eine Integration der Daten der zweiten Zellen 6 in korrespondierende erste Zellen 5 des Umgebungsmodells 100 vorgesehen. Dies ist in Figur 5 dargestellt. Zum Integrieren der Daten aus den zweiten Zellen 6 werden diese zunächst komprimiert. Das komprimierte Datenpaket 20 wird anschließend in das Umgebungsmodell 100 integriert. Dazu ist in Figur 5 der Ausschnitt 200 dargestellt, wobei zusätzlich ein Aktualisierungsbereich 50 eingezeichnet ist, der diejenigen ersten Zellen 5 umfasst, die dieselbe Umgebung 3 repräsentieren, wie die aktualisierten zweiten Zellen 6. Die Belegungswahrscheinlichkeiten in den vier Teilbereichen 61 sind in Figur 5 als 100%, 88% und 78% angegeben. Diese Belegungswahrscheinlichkeiten können nun in die ersten Zellen 5 des Aktualisierungsbereichs 50 integriert werden. Auf die Weise stehen die aktuellen Messwerte des Sensors 2 auch dem Umgebungsmodell 100 zur Verfügung. Durch die Tatsache, dass die zweiten Zellen 6 die gleichen Abmessungen und die gleichen Ausrichtungen wie die ersten Zellen 5 aufweisen, muss für die Integration der Daten aus den zweiten Zellen 6 in die ersten Zellen 5 keinerlei Transformationsvorschrift angewandt werden. Somit kann diese Integration fehlerfrei und sehr effizient durchgeführt werden.

Die Figuren 6 bis 8 zeigen unterschiedliche Erfassungsbereiche 7, die durch unterschiedliche Sensoren 2 des Fahrzeugs 1 entstehen können. So zeigt die Figur 6 beispielsweise eine Anzahl von acht Ultraschallsensoren, die jeweils einen Erfassungsbereich 7 aufweisen, der durch unterschiedliche zweite Zellen 6 abgedeckt wird. Figur 7 zeigt den Erfassungsbereich 7 einer Stereokamera, der wiederum durch zweite Sensoren 6 abgedeckt ist. Figur 8 schließlich zeigt als Beispiel eine Weitwinkelstereokamera, wobei auch hier der entsprechende Erfassungsbereich 7 durch zweite Zellen 6 abgedeckt ist.

Aus den Figuren 6 bis 8 ist somit ersichtlich, dass das erfindungsgemäße Umfeldmodell sehr flexibel arbeitet. Es können Sensordaten von einer großen Vielzahl an unterschiedlichen Sensortypen verwendet werden, um das Umgebungsmodell 100 zu erstellen. Dazu wird lediglich die Anzahl und die Anordnung der zweiten Zellen 6 variiert.

Figur 9 zeigt, wie bereits beschrieben, ein Fahrzeug 1 gemäß dem Ausführungsbeispiel der Erfindung. Das Fahrzeug 1 weist den Sensor 2 auf, der mit einem Steuergerät 4 verbunden ist, so dass das Steuergerät 4 die zuvor beschriebenen Schritte durchführen kann, um Hindernisse 8 innerhalb der Umgebung 3 des Fahrzeugs in das Umgebungsmodell 100 zu integrieren.

Damit ergeben sich eine Vielzahl von erfindungsgemäßen Vorteilen: Das Steuergerät 4, das das Umfeldmodell 100 speichert und bearbeitet, ist performant ausgebildet. Auf diese Weise ist es möglich, dass weitere Auswertungen anhand des Umgebungsmodells 100, wie beispielsweise Pfadplanung, Regelung, oder die Realisierung einer Mensch-Maschine-Schnittstelle, durch das Steuergerät 4 umgesetzt werden können. Außerdem ist es durch die Systemarchitektur möglich, dass eine Vielzahl unterschiedlicher Sensoren Daten an das Steuergerät 4 liefern kann, um das Umgebungsmodell 100 zu erstellen. Da keine Transformationsvorschrift nötig ist, erfolgt die Erstellung des Umgebungsmodells fehlerfrei und performant. Die Performance kann durch Komprimierungsverfahren, insbesondere durch eine Lauflängenkomprimierung, noch verbessert werden. Durch die eindeutige Zuordnung der zweiten Zellen zu den ersten Zellen werden nur diejenigen Elemente versandt, die einen relevanten Beitrag zu dem Umgebungsmodell 300 leisten.

Der Sensor 2 kann sehr einfach aufgebaut sein, da dieser lediglich ein Sensorsteuergerät benötigt, das einfache Algorithmen durchführen muss. Dies geschieht dadurch, dass sämtliche aufwändigen Algorithmen, die das Umgebungsmodell 100 betreffen, durch das Steuergerät 4 durchgeführt werden. Außerdem ermöglicht die Erfindung, einen einheitlichen Standard für Sensoren zu etablieren, da bereits vorgesehen ist, dass unterschiedliche Sensoren Daten zu dem Umgebungsmodell 100 beitragen können. Es müssen lediglich die Belegtheitsinformationen der zweiten Zellen an das Steuergerät 4 übertragen werden.

Durch die Verringerung der zu übertragenden Daten im Vergleich zum Stand der Technik ist es möglich, in Fahrzeugen eingesetzte Netzwerke, wie beispielsweise CAN, Flexray oder Ethernet zu entlasten.

Für den Sensor 2 ist weiterhin vorteilhaft, dass die zweite Speichervorrichtung lediglich diejenige Größe aufweisen muss, die zum Abspeichern der zweiten Zellen notwendig ist. Es ist außerdem möglich, dass die zweite Speichervorrichtung in der ersten Speichervorrichtung integriert ist, so dass die erste Speichervorrichtung und die zweite Speichervorrichtung identisch sind. In diesem Fall berechnet der Sensor 2 mittels eines Hash-Codes oder dergleichen aus den erhaltenen Abstandsinformationen direkt die in das Umgebungsmodell 100 zu integrierenden Daten 20. Außerdem kann die Größe einer jeden Zelle durch den Erfassungsbereich 7 des Sensors 2 bestimmt werden, indem die Größe einer Zelle nach dem maximalen Erfassungsbereich eines Sensors 2 ausgelegt ist, wobei bei mehreren Sensoren die maximale Reichweite desjenigen Sensors 2 verwendet wird, der den kleinsten Erfassungsbereich aufweist.

## Patentansprüche

1. Assistenzvorrichtung für ein Fahrzeug (1), umfassend
- zumindest einen Sensor (2) zum Abtasten einer Umgebung (3) des Fahrzeugs (1), und
- zumindest ein Steuergerät (4), das wechselweise mit dem Sensor (2) Daten austauschen kann,
- wobei das Steuergerät (4) eine erste Speichervorrichtung aufweist, welche die abgetastete Umgebung in zumindest einer ersten virtuellen Zelle (5), die ein erstes GridTile ist, speichert, wobei die erste virtuelle Zelle (5) einen Teilbereich der Umgebung (3) des Fahrzeugs (1) repräsentiert,
- wobei der Sensor (2) eine zweite Speichervorrichtung aufweist, welche von dem Sensor (2) gewonnene Daten in zumindest einer zweiten virtuellen Zelle (6), die ein zweites GridTile ist, speichert, wobei die zweite Zelle (6) zumindest einen Teilbereich einer Umgebung (3) des Sensors (2) repräsentiert,
- wobei die zweite Zelle (6) zumindest teilweise denselben Bereich der Umgebung (3) repräsentiert wie die erste Zelle (5), und
- wobei das Steuergerät (4) eingerichtet ist, den Inhalt der zweiten Zelle (6) in die erste Zelle (5) zu integrieren,
- wobei die zweite Zelle (6) denselben Bereich repräsentiert wie die erste Zelle (5), so dass eine Abmessung und eine Ausrichtung der ersten Zelle (5) und der zweiten Zelle (6) identisch sind.

2. Assistenzvorrichtung nach Anspruch 1, **dadurch gekennzeichnet, dass** eine Vielzahl von ersten Zellen (5) und von zweiten Zellen (6) vorhanden ist, wobei die Anzahl von ersten Zellen (5) die Anzahl von zweiten Zellen (6) übersteigt.

3. Assistenzvorrichtung nach einem der vorhergehenden Ansprüche, **dadurch gekennzeichnet, dass** das Steuergerät (4) für die Integration des Inhalts der zweiten Zelle (6) in die erste Zelle (5) ein Komprimierungsverfahren, insbesondere eine Lauflängencodierung, verwendet.

4. Assistenzvorrichtung nach einem der vorhergehenden Ansprüche, **dadurch gekennzeichnet, dass** die erste Speichervorrichtung und die zweite Speichervorrichtung identisch sind.

5. Assistenzvorrichtung nach einem der vorhergehenden Ansprüche, **dadurch gekennzeichnet, dass** der Sensor (2) eine Belegungswahrscheinlichkeit für zumindest einen Teil (61) der zweiten Zelle (6) bestimmt.

6. Verfahren zum Unterstützen eines Fahrers eines Fahrzeugs (1), umfassend die Schritte:
- Bereitstellen eines Umgebungsmodells (100), das zumindest einen Teilbereich einer Umgebung (3) des Fahrzeugs (1) in zumindest einer ersten Zelle (5), die eine ersten GridTile ist, abbildet,
- Abtasten der Umgebung (3) mittels zumindest einem Sensor (2) und Eintragen der gemessenen Umgebungsdaten in eine zweite Zelle (6), die eine zweite GridTile ist, und
- Integrieren des Inhalts der zweiten Zelle (6) in die erste Zelle (5),
- wobei die zweite Zelle (6) zumindest teilweise denselben Bereich der Umgebung (3) repräsentiert wie die erste Zelle (5),
wobei die zweite Zelle (6) denselben Bereich repräsentiert wie die erste Zelle (5), so dass eine Abmessung und eine Ausrichtung der ersten Zelle (5) und der zweiten Zelle (6) identisch sind.

7. Verfahren nach Anspruch 6, **dadurch gekennzeichnet, dass** eine Vielzahl von ersten Zellen (5) und von zweiten Zellen (6) vorhanden ist, wobei die Anzahl von ersten Zellen (5) die Anzahl von zweiten Zellen (6) übersteigt.

8. Verfahren nach einem der Ansprüche 6 bis 7, **dadurch gekennzeichnet, dass** für die Integration des Inhalts der zweiten Zelle (6) in die erste Zelle (5) ein Komprimierungsverfahren, insbesondere eine Lauflängencodierung, verwendet wird.

9. Computerprogrammprodukt, mit einem Programmcode zur Durchführung des Verfahrens nach einem der Ansprüche 6 bis 8, wenn das Computerprogrammprodukt auf einem Computer abläuft.

10. Fahrzeug (1), umfassend eine Assistenzvorrichtung nach einem der Ansprüche 1 bis 5.

## Claims

1. Assistance device for a vehicle (1), comprising
- at least one sensor (2) for sensing surroundings (3) of the vehicle (1), and
- at least one control device (4) which can mutually exchange data with the sensor (2),
- wherein the control device (4) has a first memory device which stores the sensed surroundings in at least one first virtual cell (5) which is a first GridTile, wherein the first virtual cell (5) represents part of the surroundings (3) of the vehicle (1),
- wherein the sensor (2) has a second memory device which stores data acquired by the sensor (2), in at least one second virtual cell (6) which is a second GridTile, wherein the second cell (6) represents at least one part of surroundings (3) of the sensor (2),
- wherein the second cell (6) represents at least partially the same area of the surroundings (3) as the first cell (5), and
- wherein the control device (4) is configured to integrate the content of the second cell (6) into the first cell (5),
- wherein the second cell (6) represents the same area as the first cell (5), so that the dimensions and orientation of the first cell (5) and of the second cell (6) are identical.

2. Assistance device according to Claim 1, **characterized in that** a multiplicity of first cells (5) and of second cells (6) are present, wherein the number of first cells (5) exceeds the number of second cells (6).

3. Assistance device according to one of the preceding claims, **characterized in that** the control device (4) use a compression method, in particular run-length encoding, for the integration of the content of the second cell (6) into the first cell (5).

4. Assistance device according to one of the preceding claims, **characterized in that** the first memory device and the second memory device are identical.

5. Assistance device according to one of the preceding claims, **characterized in that** the sensor (2) determines an occupation probability for at least part (61) of the second cell (6).

6. Method for assisting a driver of a vehicle (1), comprising the steps:
- making available a surroundings model (100) which models at least part of the surroundings (3) of the vehicle (1) in at least one first cell (5) which is a first GridTile,
- sensing the surroundings (3) by means of at least one sensor (2) and inputting the measured surroundings data into a second cell (6) which is a second GridTile, and
- integrating the content of the second cell (6) into the first cell (5),
- wherein the second cell (6) represents at least partially the same area of the surroundings (3) as the first cell (5),
wherein the second cell (6) represents the same area as the first cell (5) so that the dimensions and the orientation of the first cell (5) and of the second cell (6) are identical.

7. Method according to Claim 6, **characterized in that** a multiplicity of first cells (5) and of second cells (6) are present, wherein the number of first cells (5) exceeds the number of second cells (6).

8. Method according to one of Claims 6 to 7, **characterized in that** a compression method, in particular a run-length encoding, is used for the integration of the content of the second cell (6) into the first cell (5).

9. Computer program product having a program code for carrying out the method according to one of Claims 6 to 8 when the computer program runs on a computer.

10. Vehicle (1) comprising an assistance device according to one of Claims 1 to 5.

## Revendications

1. Dispositif d'assistance destiné à un véhicule (1), ledit dispositif comprenant
- au moins un capteur (2) destiné à balayer un environnement (3) du véhicule (1), et
- au moins une unité de commande (4) qui peut échanger alternativement des données avec le capteur (2),
- l'unité de commande (4) comportant un premier dispositif de mémorisation qui mémorise l'environnement balayé dans au moins une première cellule virtuelle (5) qui est un premier GridTile, la première cellule virtuelle (5) représentant une partie de l'environnement (3) du véhicule (1),
- le capteur (2) comportant un deuxième dispositif de mémorisation qui mémorise des données obtenues par le capteur (2) dans au moins une deuxième cellule virtuelle (6) qui est une deuxième GridTile, la deuxième cellule (6) représentant au moins une partie d'un environnement (3) du capteur (2),
- la deuxième cellule (6) représentant au moins partiellement la même zone de l'environnement (3) que la première cellule (5), et
- le dispositif de commande (4) étant conçu pour intégrer le contenu de la deuxième cellule (6) dans la première cellule (5),
- la deuxième cellule (6) représentant la même zone que la première cellule (5) de sorte qu'une dimension et une orientation de la première cellule (5) et de la deuxième cellule (6) sont identiques.

2. Dispositif d'assistance selon la revendication 1, **caractérisé en ce qu'**il y a une multitude de premières cellules (5) et de deuxièmes cellules (6), le nombre de premières cellules (5) dépassant le nombre de deuxièmes cellules (6).

3. Dispositif d'assistance selon l'une des revendications précédentes, **caractérisé en ce que** l'unité de commande (4) utilise un procédé de compression, notamment un codage de longueur de parcours, pour l'intégration du contenu de la deuxième cellule (6) dans la première cellule (5).

4. Dispositif d'assistance selon l'une des revendications précédentes, **caractérisé en ce que** le premier dispositif de mémorisation et le deuxième dispositif de mémorisation sont identiques.

5. Dispositif d'assistance selon l'une des revendications précédentes, **caractérisé en ce que** le capteur (2) détermine une probabilité d'occupation d'au moins une partie (61) de la deuxième cellule (6).

6. Procédé d'assistance d'un conducteur d'un véhicule (1), ledit procédé comprenant les étapes suivantes :
- fournir un modèle d'environnement (100) qui reproduit au moins une partie d'un environnement (3) du véhicule (1) dans au moins une première cellule (5) qui est un premier GridTile,
- balayer l'environnement (3) au moyen d'au moins un capteur (2) et saisir des données d'environnement mesurées dans une deuxième cellule (6) qui est un deuxième GridTile, et
- intégrer le contenu de la deuxième cellule (6) dans la première cellule (5),
- la deuxième cellule (6) représentant au moins partiellement la même zone de l'environnement (3) que la première cellule (5), la deuxième cellule (6) représentant la même zone que la première cellule (5) de sorte qu'une dimension et une orientation de la première cellule (5) et de la deuxième cellule (6) sont identiques.

7. Procédé selon la revendication 6, **caractérisé en ce qu'**il y a une multitude de premières cellules (5) et de deuxièmes cellules (6), le nombre de premières cellules (5) dépassant le nombre de deuxièmes cellules (6) .

8. Procédé selon l'une des revendications 6 à 7, **caractérisé en ce qu'**un procédé de compression, notamment un codage de longueur de parcours, est utilisé pour l'intégration du contenu de la deuxième cellule (6) dans la première cellule (5).

9. Progiciel comprenant un code de programme destiné à mettre en œuvre le procédé selon l'une des revendications 6 à 8, lorsque le progiciel est exécuté sur un ordinateur.

10. Véhicule (1), comprenant un dispositif d'assistance selon l'une des revendications 1 à 5.
